Europäisches Patentamt

European Patent Office

Office européen des brevets

(11) Veröffentlichungsnummer: **0 223 109**

**A1**

## (12) EUROPÄISCHE PATENTANMELDUNG

(21) Anmeldenummer: 86114880.7

(22) Anmeldetag: 27.10.86

(51) Int. Cl.⁴ **F04D 15/00** , F04D 27/00 ,
G01P 3/44 , H02K 11/00

(30) Priorität: 26.10.85 DE 3538225

(43) Veröffentlichungstag der Anmeldung:
27.05.87 Patentblatt 87/22

(84) Benannte Vertragsstaaten:
AT BE CH DE ES FR GB GR IT LI NL SE

(71) Anmelder: WILO-Werk GmbH & Co. Pumpen-
und Apparatebau
Nortkirchenstrasse 100
D-4600 Dortmund 30(DE)

(72) Erfinder: Kech, Hans-Jürgen, Dipl.-Ing.
Hermann-Oerth-Strasse 6
D-5804 Herdecke(DE)
Erfinder: Jury, Reinhard
Burgstrasse 15
D-5790 Brilon-Alme(DE)
Erfinder: Hübner, Jürgen
Aplerbecker-Mark-Strasse 78
D-4600 Dortmund 41(DE)

(74) Vertreter: Patentanwaltsbüro Cohausz &
Florack
Postfach 14 01 47
D-4000 Düsseldorf 1(DE)

(54) **Kreiselpumpe oder Lüfter.**

(57) Die Erfindung betrifft eine Kreiselpumpe oder
einen Lüfter mit einem Elektromotor für Wechselstrom und Drehstrom, insbesondere Spaltrohrmotor,
dessen Läuferwelle mit der Welle des Laufrades
verbunden ist. Im oder am Laufrad (9) ist mindestens
ein Signalgeber (11) in einem radialen Abstand (A)
zur Laufradachse (12) befestigt, und nahe des Laufrades (9) am Stator des Motors ist mindestens ein
Empfänger (13) befestigt, der die Signale auffängt.

## Kreiselpumpe oder Lüfter

Die Erfindung betrifft eine Kreiselpumpe oder Lüfter mit einem Elektromotor, insbesondere Spaltrohrmotor, dessen Läuferwelle mit der Welle des Laufrades verbunden ist.

Bei üblichen Elektromotoren ist es bekannt, die Drehzahl des Läufers aufgrund des Spannungswechsels zu messen. Diese bekannten Meßanordnungen sind bei Kreiselpumpen und Lüftern nicht anwendbar, da die Unterdrückung des Streufeldes im Bereich des Wickelkopfes des Elektromotors auch mit großem Aufwand nur schwer auf ein ausreichend kleines Maß verringerbar ist.

Aufgabe der Erfindung ist es, eine Kreiselpumpe oder einen Lüfter zu schaffen, deren Drehzahl bei konstruktiv geringem Aufwand exakt meßbar ist.

Diese Aufgabe wird erfindungsgemäß dadurch gelöst, daß im oder am Laufrad mindestens ein Signalgeber in einem radialen Abstand zur Laufradachse befestigt ist, und daß nahe des Laufrades am Stator des Motors mindestens ein Empfänger befestigt ist, der die Signale auffängt.

Alternativ wird diese Aufgabe dadurch gelöst, daß im oder am Laufrad mindestens ein Signalempfänger in einem radialen Abstand zur Laufradachse befestigt ist, und daß nahe des Laufrades am Stator des Motors mindestens ein Signalgeber befestigt ist, der die Signale auffängt.

Solche Konstruktionen erlauben eine einfache Drehzahlaufnahme bei Motoren als Pumpen-oder Lüfterantrieb in ein-und dreiphasiger Ausführung. Es werden exakte Meßergebnisse erreicht und die erfindungsgemäße Lehre ist bei jeder Pumpen-und Lüfterart anwendbar. Pumpe und Lüfter bauen nicht größer und sind von größter Zuverlässigkeit.

Besonders vorteilhaft ist es, wenn am oder im Laufrad diametral gegenüberliegend zwei Signalgeber bzw. Empfänger im selben Abstand zur Laufradachse befestigt sind. Dies führt nicht nur zu einem unwuchtfreien Laufrad, sondern auch zu besonders exakten und ausreichend starken Signalen.

Vorzugsweise wird vorgeschlagen, daß die Empfänger gleichsinnig (z.B. A E A E) in Reihe geschaltet sind. Die Position der Aufnehmerspulen kann dann so gewählt werden, daß sich für die durch das Streufeld induzierten Spannungen im Bereich des Wickelkopfes entgegengesetzt gleiche Kurvenformen über der Zeit ergeben. Werden die beiden Spulen gleichsinnig in Reihe geschaltet, addieren sich die Spannungen weitgehend zu Null. Die störende Wirkung des Streufeldes im Wickelkopfbereich wird damit ausreichend unterdrückt.

Vorzugsweise wird vorgeschlagen, daß der oder die Signalgeber an oder in der Seitenfläche des Laufrades angeordnet sind. Auch sollten die zwei Empfänger zur Laufradachse diametral gegenüberliegend im Abstand der Signalgeber angeordnet sein. Besonders einfach in der Herstellung und Montage sind die Pumpe oder der Lüfter dann, wenn der oder die Empfänger an der Stirnfläche des Kopfes der Wicklung des Elektromotors befestigt sind, die dem Laufrad nahe ist.

Besonders vorteilhaft in Funktion und Herstellung ist es, wenn der Signalgeber einen Permanentmagneten, eine Magnetspule, ein Metallteil, eine Antenne, einen Reflektor, eine Strahlenquelle oder einen elektromagnetischen Wandler, insbesondere einen Schallerzeuger aufweist. Hierzu wird auch vorgeschlagen, daß der Empfänger eine Photozelle, einen Sensor oder einen elektromagnetischen Wandler, insbesondere ein Mikrophon aufweist.

Besonders vorteilhaft ist es, wenn die Magnete oder Spulen in ihrer Feldrichtung gleichsinnig im Laufrad befestigt sind. Hierdurch addiert sich die Geberspannung zu einem deutlich über dem Störpegel liegenden drehzahlproportionalen Signal.

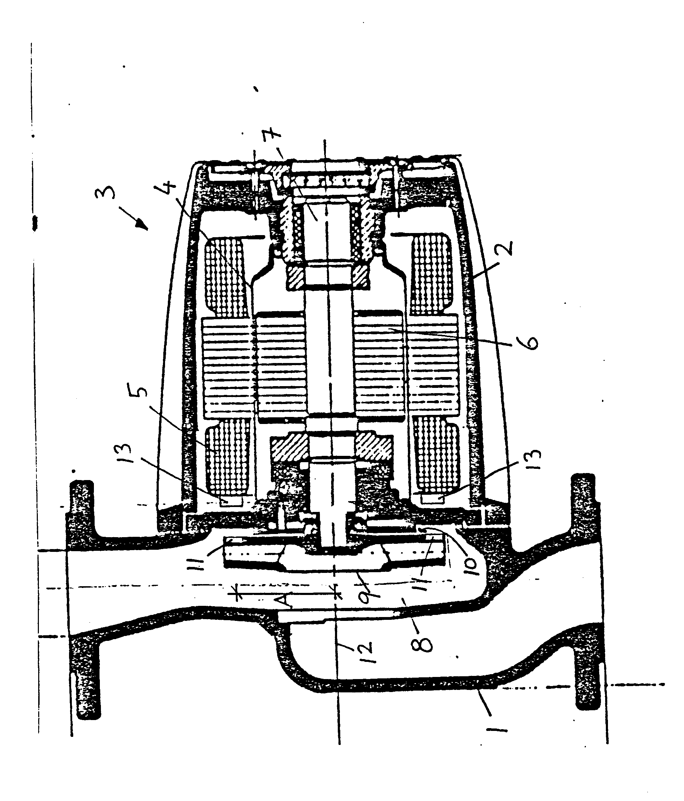

Ausführungsbeispiele der erfindungsgemäßen Kreiselpumpen sind in der Zeichnung in einem axialen Schnitt dargestellt und werden im folgenden näher beschrieben:

An dem Gehäuse 1 einer Kreiselpumpe ist das Gehäuse 2 eines Elektromotors 3 koaxial befestigt. Der Elektromotor 3 gehört zu den Naßläufermotoren und weist ein koaxiales Spaltrohr 4 auf, das von einer Wicklung 5 umgeben ist. Innerhalb des Spaltrohrs 4 ist ein Kurzschlußläufer 6 koaxial gelagert, dessen Welle 7 in den Pumpenraum 8 hineinreicht und ein koaxiales Pumpenlaufrad 9 trägt.

Im Laufrad 9 sind in der dem Elektromotor 3 zugewandten Seitenfläche 10 zwei Signalgeber 11 eingelassen, die diametral gegenüberliegend und somit auf einem Durchmesser des Laufrades angeordnet sind und zur Achse 12 des Laufrades und der Welle 7 den gleichen radialen Abstand A besitzen

Auf der dem Laufrad 9 zugewandten Stirnseite des Kopfes der Motorwicklung 5 sind zwei Signalempfänger 13 diametral gegenüberliegend in Höhe der Geber 11 und damit im selben radialen Abstand A zur Achse 12 befestigt.

In der Zeichnung ist ein Lüfter (Ventilator, Turboverdichter) nicht dargestellt. Bei einem Lüfter sind die Geber in gleicher Weise zeitlich am oder im Laufrad (Flügel-oder Schaufelrad) befestigt. Auch ist der Elektromotor in ähnlicher Weise ausgeführt und befestigt.

Alternativ zu dieser Ausführung kann das in der Zeichnung dargestellte Teil 11 der Signalempfänger sein und das Teil 13 der Signalgeber. In diesem Fall muß dafür gesorgt werden, daß die Signale vom Laufrad oder der Laufradwelle abgenommen werden. Hier können bekannte Einrichtungen verwendet werden.

Für beide Ausführungsbeispiele werden folgende Konstruktionen vorgeschlagen:

## 1. Magnetische Konstruktion

Der Signalgeber ist ein Permanentmagnet oder eine Magnetspule. Der Empfänger weist eine Spule, in der eine Spannung induziert wird, oder einen magnetischen Sensor auf, in dem eine Spannung induziert oder der Widerstand geändert wird. Als magnetischer Sensor kann ein Impulsdraht eingesetzt werden.

Impulsdrähte bestehen aus einem Verbunddraht, bei dem ein innenliegender Schaltkern durch das Mantelmaterial unter Zugspannung gehalten wird. Parallel dazu ist ein Permanentmagnetdraht gleicher Länge und etwa gleichen Durchmessers befestigt, der optimale Schalteigenschaften gewährleistet.

Als magnetische Sensoren können auch Magnetfeldhalbleiter eingesetzt werden.

## 2. Induktive Konstruktion

Der Signalgeber wird von einem Metallteil, z.B. einem Kupferring gebildet, und der Empfänger weist eine Spule auf, deren Induktion beim Vorbeibewegen verändert wird. Die zwischen Geber und Empfänger befindliche Wand der Pumpe besteht, wie auch bei dem folgenden Ausführungsbeispiel, aus einem nichtleitenden Material, insbesondere aus Kunststoff, Keramik oder Glas.

## 3. Kapazitive Konstruktion

Der Signalgeber ist ein Metallteil, insbesondere ein Kupferring, und der Empfänger weist einen Kondensator auf, dessen Kapazität sich während des Vorbeibewegens ändert.

## 4. Strahlen oder Wellen-Konstruktion

Der Signalgeber ist ein Reflektor, der von einer Strahlen-oder Wellenquelle (insbesondere einem Sender) Strahlen oder Wellen empfängt und diese zum Empfänger reflektiert, oder der Signalgeber ist die Strahlen-oder Wellenquelle selber. In beiden Fällen erhält der Empfänger stets ein Signal, wenn Signalgeber und Empfänger sich relativ zueinander bewegen. Die Strahlen sind insbesondere optisch, elektromagnetisch, Teilchen-oder Wellenstrahlen. Auch Strahlenwellen sind verwendbar. Wichtig ist, daß die Zwischenwand für die Strahlen, Teilchen und/oder Wellen durchlässig ist.

Der Signalgeber kann somit als Strahlenquelle eine Antenne, ein Glühfaden, ein radioaktives Material, ein elektromagnetischer Wandler, insbesondere ein Lautsprecher sein. Ist der Signalgeber dagegen nur ein Reflektor, so kann dieser eine Metallfläche, eine Antenne oder eine Spule sein. Also Reflektror dient schon die Laufradaußenseite, insbesondere wenn sie an der reflektierenden Stelle konkav gewölbt ist.

Ist der Signalgeber nur ein Reflektor, so ist die Strahlen-, Teilchen-oder Wellenquelle an dem Teil der Pumpe befestigt, das den Empfänger trägt.

In allen Ausführungsbeispielen kann zusätzlich zum Empfänger oder Signalgeber ein Verstärker angeordnet werden, der die abgebenden oder empfangenden Signale verstärkt.

Bei Verwendung von Permanentmagneten haben diese gleiche Feldrichtung, damit sich die Geberspannungen zu einem ausreichend hohen Signal addieren, das über dem Störpegel liegt. Die Empfänger 13 sind als Spulen gleichsinnig in Reihe geschaltet, so daß sich die Störspannungen induziert durch das Streufeld des Wickelkopfes weitgehend zu Null addieren. Die störende Wirkung des Streufeldes wird hierdurch im Wickelkopfbereich genügend unterdrückt. Beide Spulen 13 sind an eine nicht dargestellte Meßvorrichtung angeschlossen, die im Pumpenanschlußkasten untergebracht sein kann.

## Ansprüche

1. Kreiselpumpe oder Lüfter mit einem Elektromotor für Wechselstrom und Drehstrom, insbesondere Spaltrohrmotor, dessen Läuferwelle mit der Welle des Laufrades verbunden ist, **dadurch gekennzeichnet,** daß im oder am Laufrad (9) mindestens ein Signalgeber (11) in einem radialen Abstand (A) zur Laufradachse (12) befestigt ist, und daß nahe des Laufrades (9) am Stator des Motors mindestens ein Empfänger (13) befestigt ist, der die Signale auffängt.

2. Kreiselpumpe oder Lüfter mit einem Elektromotor für Wechselstrom und Drehstrom, insbesondere Spaltrohrmotor, dessen Läuferwelle mit der Welle des Laufrades verbunden ist, **dadurch gekennzeichnet,** daß im oder am Laufrad (9) mindestens ein Signalempfänger (11) in einem radialen Abstand (A) zur Laufradachse (12) befestigt ist, und daß nahe des Laufrades (9) am Stator des Motors mindestens ein Signalgeber (13) befestigt ist, der die Signale auffängt.

3. Kreiselpumpe oder Lüfter nach Anspruch 1 oder 2, **dadurch gekennzeichnet,** daß am oder im Laufrad (9) diametral gegenüberliegend zwei Signalgeber bzw. Empfänger (11) im selben Abstand (A) zur Laufradachse (12) befestigt sind.

4. Kreiselpumpe oder Lüfter nach einem der vorherigen Ansprüche, **dadurch gekennzeichnet,** daß die Empfänger (13) in Reihe geschaltet sind.

5. Kreiselpumpe oder Lüfter nach einem der Ansprüche 1, 3 oder 4, **dadurch gekennzeichnet,** daß der oder die Signalgeber (11) an oder in der Seitenfläche (10) des Laufrades (9) angeordnet sind.

6. Kreiselpumpe oder Lüfter nach einem der vorherigen Ansprüche, **dadurch gekennzeichnet,** daß zwei Empfänger (13) zur Laufradachse (12) diametral gegenüberliegend im Abstand (A) der Signalgeber (11) angeordnet sind.

7. Kreiselpumpe oder Lüfter nach einem der vorherigen Ansprüche, **dadurch gekennzeichnet,** daß der oder die Empfänger (13) an der Stirnfläche des Kopfes der Wicklung (5) des Elektromotors befestigt sind, die dem Laufrad (9) nahe ist.

8. Kreiselpumpe nach einem der vorherigen Ansprüche, **dadurch gekennzeichnet,** daß der Signalgeber (11) einen Permanentmagneten, eine Magnetspule, ein Metallteil, eine Antenne, einen Reflektor, eine Strahlenquelle oder einen elektromagnetischen Wandler, insbesondere einen Schallerzeuger aufweist.

9. Kreiselpumpe nach einem der vorherigen Ansprüche, **dadurch gekennzeichnet,** daß der Empfänger eine Photozelle, einen Sensor oder einen elektromagnetischen Wandler, insbesondere ein Mikrophon aufweist.

10. Kreiselpumpe nach Anspruch 8, **dadurch gekennzeichnet,** daß die Magnete (11) oder Spulen in ihrer Feldrichtung gleichsinnig im Laufrad - (9) befestigt sind.

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-B-1 000 446 (SIEMENS-SCHUCKERT) * Ansprüche 1,2; Spalte 3, Zeilen 25-39; Abbildungen 1,3 * | 2,3 | |
| A | DE-C- 923 578 (SIEMENS-SCHUCKERT) * Anspruch 1; Seite 3, Zeilen 71-75 * | 2,8 | |
| Y | FR-A-2 422 167 (ETRI) * Seite 1, Zeilen 1-9; Seite 4, Zeilen 20-24; Abbildungen 1-4 * | 3 | |
| Y | DE-A-3 022 434 (METRONIC ELECTRONIC) * Anspruch 1; Seite 10, Zeilen 7-19; Abbildungen 1,3 * | 4,6,10 | |
| A | GB-A- 919 421 (B.P.L.) * Seite 1, Zeilen 9-15; Seite 2, Zeilen 51-105; Abbildungen 2-5 * | 8,9 | RECHERCHIERTE SACHGEBIETE (Int. Cl.4) |
| A | DE-A-2 551 882 (FRAUNHOFER) * Anspruch 1 * | 8,9 | |
| A | US-A-3 012 144 (MARTIN) * Spalte 1, Zeilen 9-12; Spalte 2, Zeilen 10-19; Abbildung * | 8,9 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 10-02-1987 | WALVOORT B.W. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X,P | FR-A-2 568 377 (JOUAN)<br><br>* Anspruch 1; Abbildungen 1,2 *<br><br>--- | 1,3,5, 8,9 | F 04 D 15/00<br>F 04 D 27/00<br>G 01 P 3/44<br>H 02 K 11/00 |
| X | DE-A-3 241 152 (EBM)<br><br>* Seite 5, Zeilen 1-7; Seite 11, Zeile 29 - Seite 12, Zeile 24; Abbildungen 1-3,7,8 * | 1,5,8, 9 | |
| Y | | 2-4,6, 10 | |
| A | | 7 | |
| | --- | | RECHERCHIERTE SACHGEBIETE (Int. Cl.4) |
| X | GB-A-1 088 106 (ELECTRIC CONSTRUCTION)<br>* Seite 1, Zeilen 20-46; Seite 2, Zeilen 18-29; Abbildung 3 *<br><br>--- | 1,8,9 | F 04 D<br>G 01 P<br>H 02 K |
| X | EP-A-0 009 597 (SIEMENS)<br>* Ansprüche 1,4-6; Abbildungen 1-3 *<br><br>--- | 1,8,9 | |
| X | EP-A-0 105 687 (MILTON ROY)<br><br>* Seite 3, Zeile 11 - Seite 4, Zeile 14; Seite 7, Zeilen 2-9 *<br><br>---                    -/- | 1,5,8, 9 | |

Der vorliegende Recherchenbericht wurde für alle Patentansprüche erstellt.

| Recherchenort | Abschlußdatum der Recherche | Prüfer |
|---|---|---|
| DEN HAAG | 10-02-1987 | WALVOORT B.W. |

| **EINSCHLÄGIGE DOKUMENTE** | | | Seite 3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | GB-A- 900 852 (HOOVER)<br>* Seite 1, Zeilen 9-18; Seite 2, Zeilen 52-63; Abbildungen 1,6 *<br><br>--- | 7 | |
| A | FR-A-1 422 804 (GUINARD)<br>* Zusammenfassung *<br><br>--- | 1 | |
| A | CH-A- 437 510 (LICENTIA)<br>* Spalte 1; Spalte 2, Zeile 35; Abbildung 1 *<br><br>--- | 1 | |
| A | SU-A- 173 486 (VARFOLOMEEV)<br>* Zusammenfassung *<br><br>----- | 7 | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 10-02-1987 | WALVOORT B.W. |